# EUROPÄISCHE PATENTSCHRIFT

(11) **EP 0 306 850 B1**
(45) Veröffentlichungstag und Bekanntmachung des Hinweises auf die Patenterteilung: **03.03.1993**
(21) Anmeldenummer: 88114323.4
(22) Anmeldetag: 02.09.1988
(51) Int. Cl.: B60B 27/00, B60B 7/06

(54) **Befestigungseinrichtung für die Radkappe oder ein Polrad zur Sensierung von Antiblockiersystemen auf der Radnabe eines Fahrzeugrades**
Fixing of a hub cap or a sensing pulse wheel for an anti-blocking brake system to a vehicle wheel hub
Dispositif de fixation d'un chapeau d'essieu ou d'une roue polaire pour détection sur le moyeu de roue de véhicule pour systèmes anti-blocage

(30) Priorität: 09.09.1987 DE 3730184
(43) Veröffentlichungstag der Anmeldung: 15.03.1989
(73) Patentinhaber: Otto Sauer Achsenfabrik Keilberg, 63856 Bessenbach (DE)
(72) Erfinder: Koschinat, Hubert B. c/o Keil & Schaafhausen, D-6000 Frankfurt am Main 1 (DE)
(74) Vertreter: Keil, Rainer A., Dipl.-Phys. Dr.

(56) Entgegenhaltungen:
- US-A- 3 598 450
- US-A- 4 067 621
- US-A- 4 223 951

## Beschreibung

Die Erfindung bezieht sich auf eine Befestigungseinrichtung für eine Radkappe oder ein Polrad zur Sensierung von Antiblockiersystemen auf der Radnabe eines Fahrzeugrades, wobei die Radnabe an ihrem äußeren Endabschnitt eine Umfangsnut für die Aufnahme eines Dichtungsringes und der radnabenseitige Endabschnitt der Radkappe bzw. des Polrades eine der Umfangsnut der Radnabe zugekehrte Umfangsnut aufweist, mit welcher der Endabschnitt der Radkappe bzw. des Polrades über den Dichtungsring in der Umfangsnut der Radnabe durch axiales Aufschieben schnappt und eine radial äußere Flanke der Umfangsnut der Radkappe bzw. des Polrades oder der Umfangsnut der Radnabe niedriger ausgebildet ist als eine axial innere Flanke.

Eine derartige Befestigungseinrichtung ist aus der US-A-3 598 450 bekannt. Die Umfangsnut, die den Dichtungsring aufnimmt und die Umfangsnut der Radnabe weisen beide ein rechteckiges Profil auf, so daß die innere und die äußere Flanke der Umfangsnuten parallel zueinander und in radialer Richtung bezüglich einer Radachse ausgebildet sind. Ein Aufsetzen der Radkappe auf die Radnabe und ein Verschieben der Radkappe in die Einschnapplage wird bei der bekannten Einrichtung erschwert, da der Dichtungsring während des Befestigungsvorganges äußerst stark gequetscht bzw. deformiert wird und große Kräfte zum Festlegen der Radkappe auf der Radnabe erforderlich sind. Es besteht darüber hinaus die Gefahr, daß der Dichtungsring zumindest teilweise aus der ihn haltenden Umfangsnut heraustritt und somit während des Befestigungsvorganges beschädigt wird. Der Dichtungsring ist somit einem starken Verschleiß ausgesetzt und kann nicht dauerhaft eine Abdichtfunktion erfüllen, die jedoch bei ölbeschmierten Radlagern erforderlich ist. Ebenso ist es bei der bekannten Einrichtung nicht einfach, die Radkappe von der Radnabe zu entfernen, da der Dichtungsring auch in diesem Fall einer äußerst starken Deformation unterworfen wird.

Hiervon ausgehend ist es Aufgabe der vorliegenden Erfindung eine Befestigungseinrichtung der gattungsgemäßen Art vorzuschlagen, die ein leichtes Aufsetzen bzw. Abnehmen der Radkappe bzw. des Polrades von der Radnabe unter Gewährleistung einer möglichst geringen Beanspruchung des Dichtungsringes erlaubt.

Diese Aufgabe wird erfindungsgemäß im wesentlichen dadurch gelöst, daß die axial äußere Flanke flacher ausgestaltet ist als die axial innere Flanke und unter einem Winkel zwischen etwa 15° und 45° zur Axialrichtung verläuft.

Durch die Maßnahme, daß bei derjenigen Umfangsnut, in welcher der Dichtungsring erst beim Aufschieben der Radkappe bzw. des Polrades auf die Radnabe einschnappen soll, die axial äußere Flanke der Umfangsnut flacher ausgestaltet ist als die innere Flanke, wird erreicht, daß man die Radkappe bzw. das Polrad leichter in die Einschnapplage bringen kann, in welcher der Dichtungsring in beiden Umfangsnuten liegt und die beiden Teile gegeneinander abdichtet. Dabei verläuft die axial äußere Flanke unter einem Winkel zwischen etwa 15 und 45° zur Axialrichtung, wodurch für einen straffen aber dennoch bei Bedarf leicht lösbaren Sitz der Radkappe bzw. des Polrades auf dem Endabschnitt der Radnabe gesorgt wird.

Vorzugsweise liegt die Radkappe bzw. das Polrad in der aufgeschnappten Lage mit ihrer bzw. seiner radnabenseitigen Stirnfläche an einer Schulter der Radnabe an. Hierdurch wird der Sitz der Radkappe bzw. des Polrades an der Radnabe zusätzlich stabilisiert. Zum Lösen der Radkappe bzw. des Polrades von der Radnabe können im Grenzbereich zwischen Stirnfläche und Schulter Abflachungen bzw. Schlitze zum Eingriff mit einem Werkzeug wie bspw. einem Schraubenzieher, vorhanden sein, wodurch das Demontieren der Radkappe bzw. des Polrades erleichtert wird.

Diejenige Umfangsnut, in welcher der Dichtungsring dauerhaft aufgenommen werden soll, also entweder die Umfangsnut der Radnabe oder die Umfangsnut der Radkappe bzw. des Polrades weisen vorzugsweise einen im wesentlichen zur Nutmittenebene symmetrischen Nutgrund auf.

Vorzugsweise übergreift die Radkappe bzw. das Polrad den Endabschnitt der Radnabe. Dies erlaubt eine besonders einfache Montage und Demontage und bei der Radkappe eine zusätzliche Abdeckung des Radnabeninnenraumes gegen Eindringen von Schmutz. Es ist aber auch umgekehrt möglich, daß die Radkappe bzw. das Polrad in den Endabschnitt der Radnabe eingreift. Deswegen können die zuvor und nachfolgend geschilderten Ausgestaltungen von Radnabe einerseits und Radkappe bzw. Polrad andererseits in ihren Endbereichen, um das Aufschnappen zu gewährleisten, ohne weiteres entsprechend umgestaltet bzw. gegeneinander vertauscht zu werden, um von einem Übergreifen der Radkappe bzw. des Polrades über die Radnabe zu einem Eingreifen der Radkappe bzw. des Polrades in die Radnabe überzugehen.

Die Innenfläche des Endabschnitts der Radkappe bzw. des Polrades verläuft vorzugsweise von der inneren Umfangsnut aus bis zur Stirnfläche unter einem geringen Öffnungswinkel, von z.B. etwa 15°, zur Axialrichtung schräg nach außen. Der Durchmesser der Einführungsöffnung der Radkappe bzw. des Polrades sind dadurch etwas größer als der Außendurchmesser des Dichtungsringes auf der Radnabe, auf welche die Radkappe bzw. das Polrad aufgesteckt werden soll.

Die axial innere Flanke verläuft dabei beispielsweise unter einem Winkel zwischen etwa 15 und 45°, vorzugsweise von etwa 30°, zur Radialrichtung, während die beiden Flanken der Umfangsnuten in einem Winkel zwischen etwa 60 und 120° stehen können.

Weitere Vorteile und Anwendungsmöglichkeiten der vorliegenden Erfindung ergeben sich aus der nachfolgenden Beschreibung von Ausführungsbeispielen anhand der Zeichnung.

### Es zeigt:

- Fig. 1: schematisch im Schnitt (zur oberen Hälfte weggebrochen) eine die Erfindung aufweisende Befestigungseinrichtung für eine Radkappe und für ein Polrad an einer Radnabe,
- Fig. 2: schematisch im Schnitt eine andere Ausführungsform einer für die Verwendung bei der erfindungsgemäßen Befestigungseinrichtung in ihrem axial äußeren Endbereich entsprechend ausgebildete Radnabe,
- Fig. 3: schematisch im Schnitt eine für die Verwendung bei einer erfindungsgemäßen Befestigungseinrichtung, z.B. im Zusammenwirken mit einer Radnabe gemäß Fig. 2 zu verwendende Radkappe,
- Fig. 4: eine vergrößerte Darstellung des Ausschnittes Z von Fig. 3 im Bereich eines radnabenseitigen Endabschnittes der Radkappe,
- Fig. 5: eine vergrößerte Schnittdarstellung des axial äußeren Endabschnittes einer für die erfindungsgemäße Befestigungseinrichtung bestimmten Radnabe,
- Fig. 6: demgegenüber verkleinert im Schnitt ein Polrad zur Verwendung mit einer Radnabe gemäß Fig. 5, und
- Fig. 7: eine vergrößerte Schnittdarstellung des Ausschnitts Y des Polrad gemäß Fig. 6.

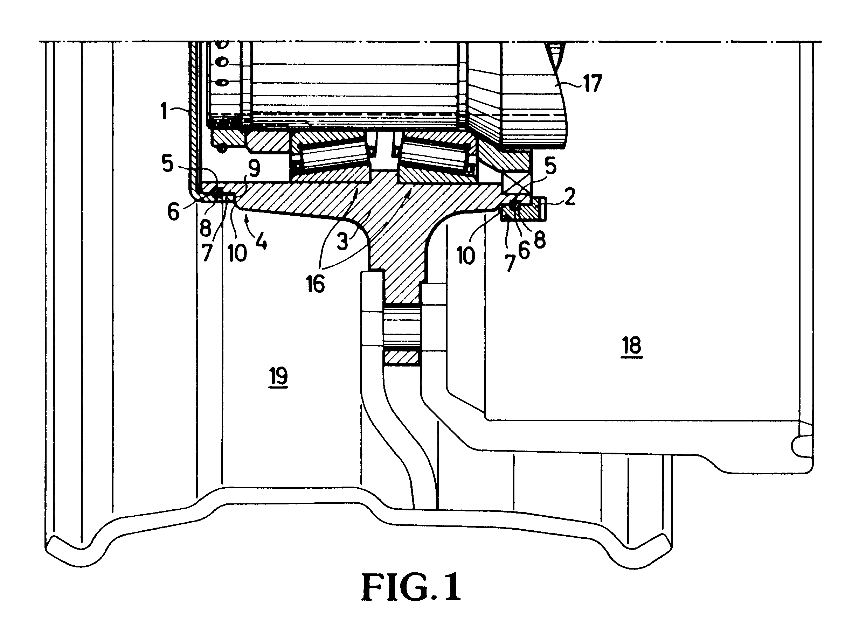

An der Radnabe 3 gemäß Fig. 1, welche mittels mindestens eines Radlagers 16 auf dem Achszapfen einer Radachse 17 drehbar gelagert ist, sind über einen äußeren Flansch die Bremstrommel 18 und das Rad 19 festgeschraubt. Auf den verjüngten äußeren Endabschnitten der Radnabe 3 ist einerseits eine Radkappe 1 andererseits ein Polrad 2 mit je einer erfindungsgemäßen Befestigungseinrichtung gehalten. Zu diesem Zweck hat die Radkappe 1 einen etwa senkrecht von dem Kappenboden abgewinkelten Randflansch. In der Innenfläche der radnabenseitigen Endabschnitte 7 von dem Randflansch der Radkappe 1 und des Polrades 2 ist je eine Umfangsnut 8 angeordnet. In der Außenfläche der Endabschnitte der Radnabe 4 befindet sich je eine Umfangsnut 5, in welcher je ein Dichtungsring 6 aufgenommen ist. In der Darstellung von Fig. 1 sind die Radkappe 1 und das Polrad 2 mit ihren Endabschnitten 7 so auf den Endabschnitten 4 der Radnabe 3 aufgeschnappt, daß die Dichtungsringe 6 sowohl in der Umfangsnuten 5 als auch in den Umfangsnuten 8 liegen.

In diesem aufgeschnappten Zustand liegen die Radkappe 1 und das Polrad 2 mit den Stirnflächen 9 ihrer Endabschnitte 7 an je einer äußeren Ringschulter 10 der Endabschnitte 4 der Radnabe 3 an.

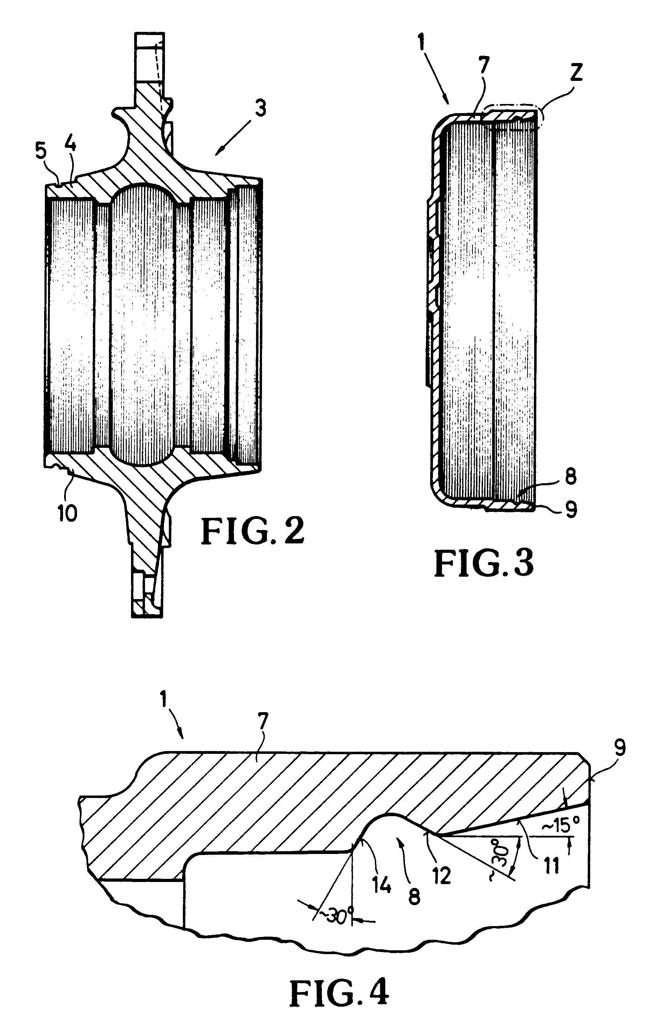

Bei der Ausführungsform der Radnabe von Fig. 2 hat die in diesem Beispiel nur einseitig vorgesehene Umfangsnut 5 einen im wesentlichen zur Nutmittenebene symmetrischen Nutgrund. In der Umfangsnut 5 wird der Dichtungsring 6 dauerhaft aufgenommen. Der Endabschnitt 4 verbreitert sich zur Radnabenmittenebene zu etwa konisch. Auf ihn kann entweder eine Radkappe oder ein Polrad aufgesetzt werden.

Fig. 3 veranschaulicht eine Radkappe 1, die auf einer Radnabe 3 gemäß Fig. 2 der erfindungsgemäßen Befestigungseinrichtung festgelegt werden soll. Wie insbesondere aus der vergrößerten Darstellung von Fig. 4 ersichtlich, hat die Radkappe 1 auf der Innenfläche ihres Endabschnittes 7 eine Umfangsnut 8, deren axial äußere Flanke 12 einen Winkel von z.B. 30° zur Axialrichtung bildet, während die axial innere Flanke 14 steiler verläuft und zwar unter einem Winkel von z.B. 30° zur Radialrichtung. Die axial äußere Flanke 12 ist außerdem niedriger ausgebildet als die axial innere Flanke 14. Auf diese Weise kann die Radkappe 1 mit ihrem Endabschnitt 7 den Endabschnitt 4 der Radnabe 3 übergreifend leicht in eine Stellung gebracht werden, in welcher der sich in der Umfangsnut 5 der Radnabe 3 befindliche Dichtungsring 6 in die innere Umfangsnut 8 der Radkappe 1 einschnappt, so daß die Radkappe 1 sicher aber lösbar an der Radnabe 3 gehalten wird. In dieser Lage übergreift die Radkappe 1 den Endabschnitt 4 der Radnabe 3 mit ihrem Endabschnitt 7. Das Aufsetzen der Radkappe 1 auf den Endabschnitt 4 der Radnabe 3 wird dadurch erleichtert, daß die Innenfläche 11 des Endabschnitts 7 der Radkappe 1 von der inneren Umfangsnut 8 aus bis zur Stirnfläche 9 unter einem geringen Öffnungswinkel von z.B. 15° zur Axialrichtung schräg nach außen verläuft, so daß der Durchmesser der Einführungsöffnung der Radkappe 1 geringfügig größer ist als der stirnseitige Durchmesser des Endabschnitts 4 der Radnabe 3 und ggf. geringfügig größer als der Außendurchmesser des Dichtungsringes 6 und die Innenfläche 11 als Auflaufschräge für den Dichtungsring 6 wirkt, bis dieser in die Nut 8 einschnappt.

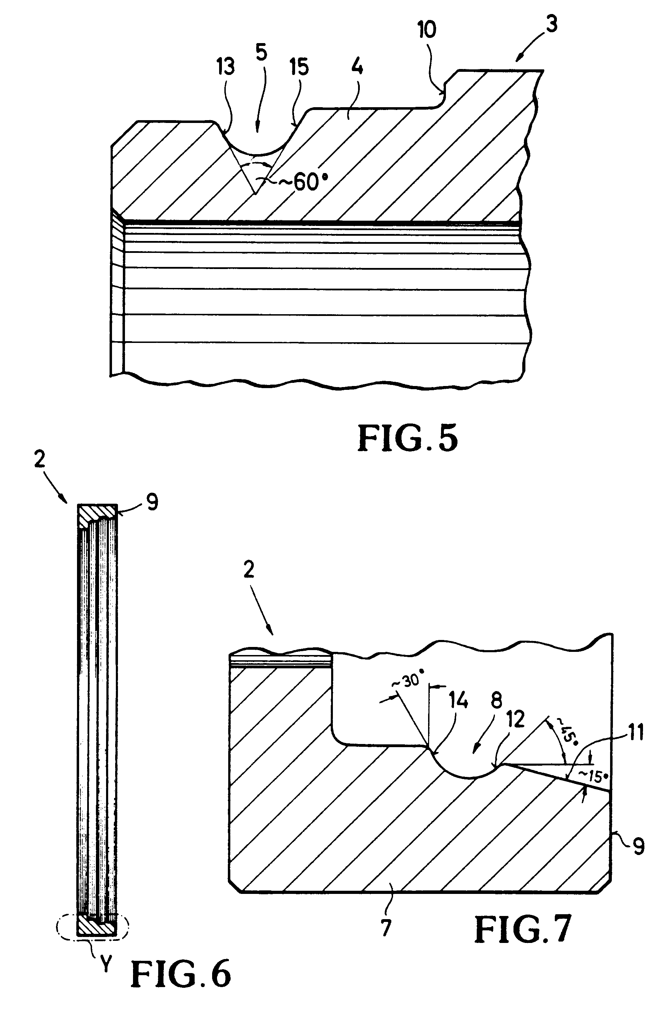

Fig. 5 veranschaulicht eine andere Ausgestaltung des Endabschnittes 4 der Radnabe 3 für das Aufschnappen einer Radkappe 1 bzw. eines für Antiblockiersysteme bestimmten Polrades 2 gemäß Fig. 6. Bei der Ausgestaltung gemäß Fig. 5 ist die äußere Umfangsnut 5 des Endabschnittes 4 in der Weise unsymmetrisch, daß die axial äußere Flanke 13 zwar spiegelsymmetrisch im etwa gleichem Winkel wie die radial innere Flanke 15 zur Radialrichtung verläuft, die Flanke 13 jedoch niedriger ist als die Flanke 15, so daß der Dichtungsring leicht in die Umfangsnut 5 einschnappen kann, wenn er von axial außen aufgeschoben wird. Die Flanken 13 und 15 bilden zwischen sich in diesem Beispiel einen Winkel von etwa 60°. Der Endabschnitt 7 des Polrades 2 gemäß Fig. 6 ist im einzelnen entsprechend der Fig. 7 ausgebildet. Dieser Endabschnitt 7 ist ähnlich dem Endabschnitt 7 der Radkappe 1 von Fig. 4, wobei die axial äußere Flanke 12 jedoch nicht so flach verläuft wie die äußere Flanke von Fig. 4, nämlich in diesem Beispiel unter einem Winkel von etwa 45° zur Axialrichtung. Hierdurch wird der feste Sitz des Polrings 2 auf der Radnabe 3 gemäß Fig. 5 noch verbessert.

### Bezugszeichenliste:

- 1: Radkappe
- 2: Polrad
- 3: Radnabe
- 4: äußerer Endabschnitt
- 5: Umfangsnut
- 6: Dichtungsring
- 7: radnabenseitiger Endabschnitt
- 8: Umfangsnut
- 9: Stirnfläche
- 10: Schulter
- 11: Innenfläche
- 12: äußere Flanke
- 13: äußere Flanke
- 14: innere Flanke
- 15: innere Flanke
- 16: Radlager
- 17: Radachse
- 18: Bremstrommel
- 19: Rad

## Patentansprüche

1. Befestigungseinrichtung für eine Radkappe (1) oder ein Polrad (2) zur Sensierung von Antiblockiersystemen auf der Radnabe (3) eines Fahrzeugrades, wobei die Radnabe (3) an ihrem äußeren Endabschnitt (4) eine Umfangsnut (5) für die Aufnahme eines Dichtungsringes (6) und der radnabenseitige Endabschnitt (7) der Rad kappe (1) bzw. des Polrades (2) eine der Umfangsnut (5) der Radnabe (3) zugekehrte Umfangsnut (8) aufweist, mit welcher der Endabschnitt (7) der Radkappe (1) bzw. des Polrades (2) über den Dichtungsring (6) in der Umfangsnut (5) der Radnabe (2) durch axiales Aufschieben schnappt und eine axiale äußere Flanke (12, 13) der Umfangsnut (8) der Radkappe (1) bzw. des Polrades (2) oder der Umfangsnut (5) der Radnabe (3) niedriger ausgebildet ist als eine axial innere Flanke (14, 15), dadurch gekennzeichnet, daß die axial äußere Flanke (12, 13) flacher ausgestaltet ist als die axial innere Flanke (14, 15) und unter einem Winkel zwischen etwa 15° und 45° zur Axialrichtung verläuft.

2. Befestigungseinrichtung nach Anspruch 1, dadurch gekennzeichnet, daß die Radkappe (1) bzw. das Polrad (2) in der aufgeschnappten Lage mit ihrer bzw. seiner radnabenseitigen Stirnfläche (9) an einer Schulter (10) der Radnabe (3) anliegt.

3. Befestigungseinrichtung nach Anspruch 1 oder 2, dadurch gekennzeichnet, daß die Umfangsnut (5) der Radnabe (3) oder die Umfangsnut (8) der Radkappe (1) bzw. des Polrades (2) einen im wesentlichen zur Nutmittenebene symmetrischen Nutgrund aufweist.

4. Befestigungseinrichtung nach einem der Ansprüche 1 bis 3, dadurch gekennzeichnet, daß die Radkappe (1) bzw. das Polrad (2) den Endabschnitt (4) der Radnabe (3) übergreift.

5. Befestigungseinrichtung nach einem der Ansprüche 1 bis 4, dadurch gekennzeichnet, daß die Innenfläche (11) des Endabschnitts (7) der Radkappe (1) bzw. des Polrades (2) von der inneren Umfangsnut (8) aus bis zur Stirnfläche (9) unter einem geringen Öffnungswinkel, von z.B. etwa 15°, schräg nach außen verläuft.

6. Befestigungseinrichtung nach einem der Ansprüche 1 bis 5, dadurch gekennzeichnet, daß die axial innere Flanke (14, 15) unter einem Winkel zwischen etwa 15 und 45°, vorzugsweise von etwa 30°, zur Radialrichtung verläuft.

7. Befestigungseinrichtung nach einem der Ansprüche 1 bis 6, dadurch gekennzeichnet, daß die beiden Flanken (12, 13; 14, 15) der Umfangsnuten (5, 8) in einem Winkel zwischen etwa 60 und 120° zueinander stehen.

## Claims

1. Securing device for a wheel cap (1) or a sensing magnet wheel (2) for antilocking systems on the wheel hub (3) of a vehicle wheel, with the wheel hub (3) having on its outer end section (4) a peripheral groove (5) for the accommodation of a sealing ring (6) and the wheel hub-side end section (7) of the wheel cap (1) or of the magnet wheel (2) respectively having a peripheral groove (8) facing the peripheral groove (5) of the wheel hub (3), with which peripheral groove (8) the end section (7) of the wheel cap (1) or of the magnet wheel (2) respectively snaps over the sealing ring (6) in the peripheral groove (5) of the wheel hub (2) (sic) by axially sliding thereon, and a axially outer flank (12, 13) of the peripheral groove (8) of the wheel cap (1) or of the magnet wheel (2) respectively or of the peripheral groove (5) of the wheel hub (3) being formed so as to be lower than an axially inner flank (14, 15), characterised in that the axially outer flank (12, 13) is shaped so that it is flatter than the axially inner flank (14, 15) and extends at an angle of between approximately 15° and 45° relative to the axial direction.

2. Securing device according to claim 1, characterised in that the wheel cap (1) or the magnet wheel (2) respectively in the snapped-on position rests with its wheel hub-side face (9) against a shoulder (10) of the wheel hub (3).

3. Securing device according to claim 1 or 2, characterised in that the peripheral groove (5) of the wheel hub (3) or the peripheral groove (8) of the wheel cap (1) or of the magnet wheel (2) respectively has a groove base which is substantially symmetrical about the plane of the groove centre.

4. Securing device according to one of the claims 1 to 3, characterised in that the wheel cap (1) or the magnet wheel (2) respectively overlaps the end section (4) of the wheel hub (3).

5. Securing device according to one of the claims 1 to 4, characterised in that the inner surface (11) of the end section (7) of the wheel cap (1) or of the magnet wheel (2) respectively extends obliquely outwards from the inner peripheral groove (8) as far as the face (9) at a small opening angle of, for example, approximately 15°.

6. Securing device according to one of the claims 1 to 5, characterised in that the axially inner flank (14, 15) extends at an angle of between approximately 15 and 45°, preferably approximately 30°, relative to the radial direction.

7. Securing device according to one of the claims 1 to 6, characterised in that the two flanks (12, 13; 14, 15) of the peripheral grooves (5, 8) are at an angle of between approximately 60 and 120° to each other.

## Revendications

1. Dispositif de fixation sur le moyeu (3) d'une roue de véhicule d'un chapeau de moyeu (1) ou d'une roue polaire (2) destinée à la détection dans des systèmes anti-blocage, le moyeu de roue (3) comportant à son extrémité (4) extérieure une gorge périphérique (5) destinée au montage d'un joint (6) et l'extrémité (7) côté moyeu du chapeau de moyeu (1) ou de la roue polaire (2) comportant une gorge périphérique (8) qui est tournée vers la gorge périphérique (5) du moyeu de roue (3) et au moyen de laquelle l'extrémité (7) du chapeau de moyeu (1) ou de la roue polaire (2), par emboîtement axial, s'enclenche sur le joint (6) monté dans la gorge périphérique (5) et un flanc (12, 13) situé axialement vers l'extérieur de la gorge périphérique (8) du chapeau de moyeu (1) ou de la roue polaire (2) ou de la gorge périphérique (5) du moyeu de roue (3) présentant une hauteur plus faible qu'un flanc (14, 15) situé axialement vers l'intérieur, caractérisé par le fait que le flanc (12, 13) situé axialement vers l'extérieur a une hauteur plus faible que le flanc (14, 15) situé axialement vers l'intérieur et présente un angle compris entre 15° et 45° environ par rapport à la direction axiale.

2. Dispositif de fixation selon la revendication 1, caractérisé par le fait que le chapeau de moyeu (1) ou la roue polaire (2), en position encliquetée, est appliqué par sa face frontale (9) côté moyeu contre un épaulement (10) du moyeu de roue (3).

3. Dispositif de fixation selon la revendication 1 ou 2, caractérisé par le fait que la gorge périphérique (5) du moyeu de roue (3) ou la gorge périphérique (8) du chapeau de moyeu (1) ou de la roue polaire (2) comporte un fond de gorge sensiblement symétrique par rapport au plan médian de la gorge.

4. Dispositif de fixation selon l'une des revendications 1 à 3, caractérisé par le fait que le chapeau de moyeu (1) ou la roue polaire (2) s'engage sur l'extrémité (4) du moyeu de roue (3).

5. Dispositif de fixation selon l'une des revendications 1 à 4, caractérisé par le fait que la surface intérieure (11) de l'extrémité (7) du chapeau de moyeu (1) ou de la roue polaire (2) est inclinée avec un angle d'ouverture de faible valeur, par exemple de 15° environ, en direction de l'extérieur à partir de la gorge périphérique (8) intérieure jusqu'à la face frontale (9).

6. Dispositif de fixation selon l'une des revendications 1 à 5, caractérisé par le fait que le flanc (14, 15) situé axialement à l'intérieur forme un angle compris entre 15° et 45° environ, de préférence 30° environ, avec la direction radiale.

7. Dispositif de fixation selon l'une des revendications 1 à 6, caractérisé par le fait que les deux flancs (12, 13; 14, 15) des gorges périphériques (5, 8) forment entre eux un angle compris entre 60 et 120° environ.
